# EUROPÄISCHE PATENTSCHRIFT

(11) **EP 0 406 596 B1**
(45) Veröffentlichungstag und Bekanntmachung des Hinweises auf die Patenterteilung: **19.05.1993**
(21) Anmeldenummer: 90111270.6
(22) Anmeldetag: 15.06.1990
(51) Int. Cl.: B29D 23/22, B29C 67/14

(54) **Verfahren zur Herstellung von bund- oder flanschförmigen Verstärkungen auf zylindrischen Faserverbundkörpern, insbesondere auf gewickelten Faserverbundrohren**
Method for manufacturing collar- or flangelike reinforcements upon fibrous composite elements, particularly upon wound fibrous composite pipes
Procédé pour la fabrication de renforcements en forme de collets ou de brides sur des corps composites renforcés de fibres, notamment sur des tuyaux composites enroulés renforcés de fibres

(30) Priorität: 07.07.1989 DE 3922335
(43) Veröffentlichungstag der Anmeldung: 09.01.1991
(73) Patentinhaber: URANIT GmbH, D-52409 Jülich (DE)
(72) Erfinder: Corr, Horst, D-5132 Übach-Palenberg (DE)
(74) Vertreter: Gottlob, Peter, Dipl.-Ing.

(56) Entgegenhaltungen:
- DE-A- 1 753 801
- DE-A- 2 738 982
- US-A- 2 744 043
- US-A- 2 843 153

## Beschreibung

Die Erfindung betrifft ein Verfahren zur Herstellung von bund- oder flanschförmigen Verstärkungen auf zylindrischen Faserverbundkörpern, insbesondere auf gewickelten Faserverbundrohren, bei dem entlang den zu verstärkenden Bereichen des Verbundkörpers mehrere Schichten von harzgetränkten Faserwicklungen übereinander gewickelt werden und danach das Harz ausgehärtet wird.

Aus der DE-PS 30 29 890 ist ein Verfahren zur Herstellung von Faserverbundrohren mit bund- oder flanschförmigen Verstärkungen an den Rohrenden bekannt. Dabei werden auf einen Wickeldorn zunächst mehrere Schichten von Umfangs- und Kreuzwicklungen aus kunststoffgetränkten Fasern, z.B. Kohlenstoffasern, übereinandergewickelt. Sodann werden entlang den zu verstärkenden Bereichen des Verbundrohrs zusätzliche Umfangswicklungen aufgebracht. Danach wird das Verbundrohr an den verstärkten Bereichen durchtrennt, so daß man mehrere Rohrabschnitte mit flanschartig verstärkten Enden erhält. Mit dieser Methode können jedoch nur Verstärkungen erzielt werden, die wenig mehr als die Wandstärke des Verbundrohres betragen, da die Faserwicklungen an den Flanken der Verstärkungen einen natürlichen, relativ flachen Anstiegswinkel haben, so daß diese Flanken relativ viel Platz verbrauchen. Vor allem ist es dadurch nicht möglich, durch ledigliches Wickeln senkrecht zur Rohrlängsachse verlaufende Flanschflächen zu erzeugen, wie dies z.B. bei metallischen Rohrflanschen üblich ist.

Der Erfindung liegt daher die Aufgabe zugrunde, ein Verfahren der gattungsgemäßen Art mit einfachen Mitteln so zu gestalten, daß damit im Wickelverfahren und ohne wesentliche spanabhebende Nachbearbeitung bund- oder flanschartige Verstärkungen auf zylindrischen Verbundkörpern hergestellt werden können, die eine weitgehend vorgebbare Geometrie bei im wesentlichen senkrecht zur Rohrlängsachse verlaufenden Stirnflächen haben.

Diese Aufgabe wird mit den im Kennzeichen des Patentanspruchs 1 bezeichneten Maßnahmen gelöst. Die hierauf bezogenen Unteransprüche beinhalten vorteilhafte Weiterbildungen und Ausgestaltungen dieser Maßnahmen.

Mit der Erfindung wird es ermöglicht, auf einem eng begrenzten Bereich des Verbundkörpers einen kerbspannungsfreien Bund oder Flansch vorgebbarer Dicke und Höhe mit senkrecht zur Rohrlängsachse verlaufenden Stirnflächen oder Stirnflächenanteilen zu erzeugen. Eine die Festigkeit beeinträchtigende, zerspanende Nachbearbeitung ist nicht erforderlich.

Ein Ausführungsbeispiel der Erfindung wird im folgenden anhand der Zeichnungen erläutert:
- Die Figuren 1 und 2: verdeutlichen den erfindungsgemäßen Verfahrensablauf;
- die Figur 3: zeigt ein Verbundrohr mit angewickeltem Bund;
- die Figur 4: zeigt eine federelastische, längsgeschlitzte Spannhülse.

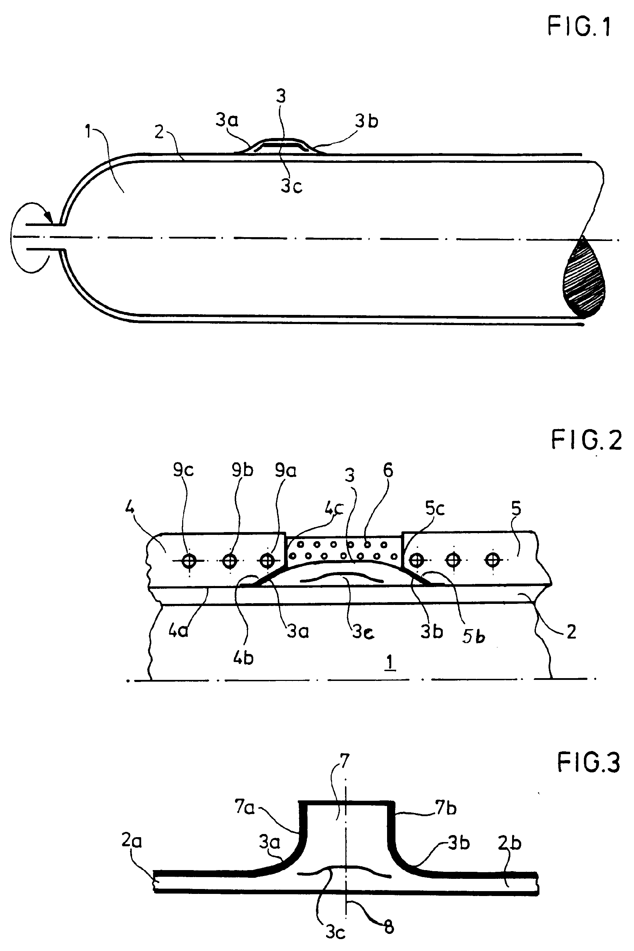

Gemäß Figur 1 wird auf ein noch "naßes", auf einen Wickeldorn 1 gewickeltes Faserverbundrohr 2 entlang dem zu verstärkenden Bereich ein Wulst 3 aus kunstharzgetränkten Fasern mit beidseitig in einem natürlichen Winkel ansteigenden Flanken 3a, 3b angewickelt. In diesen Wulst 3 kann ein Gewebeband 3c miteingewickelt werden, wodurch die Biegefestigkeit des herzustellenden Bundes oder Flanschs erhöht wird. Sodann wird gegen die beiden Flanken 3a, 3b des Wulstes 3 je eine Spannhülse 4, 5 angedrückt und verspannt (Figur 2). Der so entstehende ringförmige Zwischenraum zwischen den beiden Stirnflächen 4c und 5c der Spannhülsen 4, 5 wird mit weiteren Faserwicklungen 6 aus kunstharzgetränkten Fasern, z.B. Kohlenstoffasern, zur Ausbildung eines Bundes aufgefüllt. Nach dem Gelieren und Aushärten der Faserwicklungen 2, 3, 6 werden die Spannhülsen 4, 5 entspannt und vom Wickeldorn 1 abgezogen.

Der so entstehende Bund 7 (Figur 3) ist organisch mit dem Rohr 2 verbunden, da sowohl der Wulst 3 als auch die Wicklungen 6 aufgebracht werden, während das Rohr 2 noch "naß" ist. Der natürliche Übergang vom Rohr 2 zu den senkrechten Stirnflächen 7a, 7b über die Flanken 3a, 3b des Bundes 7 verhindert die Entstehung von Kerbspannungen. Der Bund 7 kann erforderlichenfalls senkrecht zur Längsachse des Rohres 2 durchtrennt werden (Trennlinie 8), so daß zwei Rohrabschnitte 2a, 2b mit angewickelten Endflanschen entstehen.

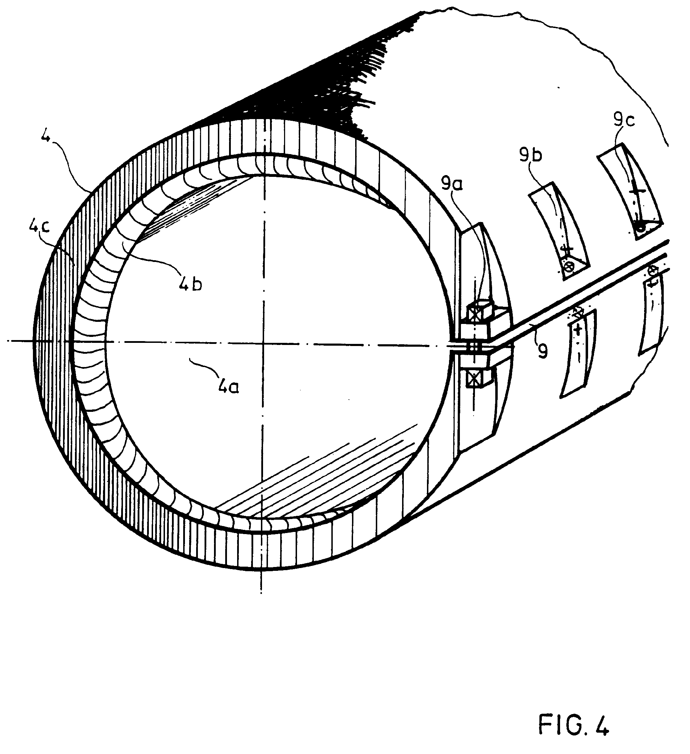

Die Spannhülsen 4, 5 bestehen aus einem federelastischen Material und haben einen Längsschlitz 9, der von mehreren Spannschrauben 9a, 9b, 9c durchsetzt wird (Figur 4). Im gespannten Zustand entspricht der Innendurchmesser der Spannhülse im zylindrischen Teil 4a dem Außendurchmesser des Rohres 2. An einer Stirnseite geht der Kreiszylinder in einen Konus 4b über, der der Flanke 3a des Wulstes 3 angepaßt ist. Die sich hieran anschließende Stirnfläche 4c, bestimmt die Höhe bzw. den Durchmesser des Bundes 7. Die Spannhülsen 4, 5 haben denselben Wärmeausdehnungskoeffizienten wie der Wickeldorn 1 und werden während ihres Einsatzes auf derselben Temperatur gehalten wie der Wickeldorn 1. Um nach dem Lösen der Schrauben 9a, 9b, 9c das Abziehen zu erleichtern, werden die mit Kunstharz in Berührung kommenden Flächen 4a, 4b, 4c der Spannhülsen mit einem Trennmittel versehen.

Die von den Hülsen erzeugten Oberflächen an Rohr und Bund sind extrem glatt, versiegelt und haben eine hohe Maßhaltigkeit. Dadurch kann eine spanabhebende, die Fasern verletzende Nachbearbeitung in den meisten Anwendungsfällen entfallen. Anstelle einteiliger Spannhülsen mit Längsschlitz können im Bedarfsfall auch zwei- oder mehrteilige Hülsen verwendet werden, die dann ebenfalls mittels Verschraubungen oder anderen Spannmitteln, z.B. Spannbändern, gegen das Rohr 2 und den Wulst 3 verspannt werden. Auch können die Spannhülsen an ihren Stirnflächen so modifiziert werden, daß der mit Faserwicklungen aufzufüllende Zwischenraum eine stufenförmige Gestalt oder konkave Stirnflächen erhält.

## Patentansprüche

1. Verfahren zur Herstellung von bund- oder flanschförmigen Verstärkungen auf zylindrischen Faserverbundkörpern, insbesondere auf gewickelten Faserverbundrohren, bei dem entlang den zu verstärkenden Bereichen des Verbundkörpers mehrere Schichten von harzgetränkten Faserwicklungen übereinandergewickelt werden und danach das Harz ausgehärtet wird, dadurch gekennzeichnet, daß
a) entlang dem zu verstärkenden Bereich des Faserverbundkörpers (2) zunächst ein Wulst (3) mit beidseitig kontinuierlich ansteigenden Flanken (3a, 3b) auf den Verbundkörper (2) gewickelt wird, worauf
b) gegen die beiden Flanken (3a, 3b) des Wulstes (3) je eine Spannhülse (4, 5) angedrückt und verspannt wird, deren Innenfläche auf der dem Wulst zugewandten Seite in einen den Flanken (3a, 3b) des Wulstes (3) angepaßten Konus (4b, 5b) übergeht und deren Stirnfläche (4c, 5c) am konusseitigen Ende den Durchmesser der bund- oder flanschförmigen Verstärkung (7) bestimmt, und daß
c) der Zwischenraum zwischen den Stirnflächen (4c, 5c) der beiden Spannhülsen (4, 5) mit Faserwicklungen (6) aufgefüllt wird, worauf
d) die Spannhülsen (4, 5) gelöst und entfernt werden.

2. Verfahren nach Anspruch 1, dadurch gekennzeichnet, daß im Zuge von Schritt a) wenigstens ein Fasergewebeband (3c) miteingewickelt wird.

3. Verfahren nach Anspruch 1, dadurch gekennzeichnet, daß die mit Verbundmaterial in Berührung kommenden Innenflächen und Stirnflächen der Spannhülsen (4, 5) mit einem Trennmittel beschichtet werden.

4. Verfahren zur Herstellung von auf einen Wickeldorn (1) gewickelten, mit bund- oder flanschförmigen Verstärkungen (7) zu versehenden Faserverbundrohren (2) nach Anspruch 1, gekennzeichnet durch die Verwendung von Spannhülsen (4, 5), die denselben Wärmeausdehnungskoeffizienten haben wie der Dorn (1) und deren Innendurchmesser im kreiszylindrischen Teil im gespannten Zustand dem Außendurchmesser des Rohrs (2) angepaßt ist, wobei die Spannhülsen (4, 5) während ihres Einsatzes auf derselben Temperatur gehalten werden wie der Dorn (1).

## Claims

1. Method of producing collar- or flange-like reinforcements on cylindrical fibrous composite bodies, more especially on wound fibrous composite pipes, wherein a plurality of layers of resin-impregnated fibrous windings are wound over one another along the regions of the composite body to be reinforced, and subsequently the resin is hardened, characterised in that
a) a bead (3), having continuously ascending walls (3a, 3b) at each end, is initially wound onto the composite body (2) along the region of the fibrous composite body (2) to be reinforced, whereupon
b) a clamping sleeve (4, 5) is pressed against each of the two walls (3a, 3b) of the bead (3) and is tensioned, the internal face of said sleeve extending, at the end facing the bead, into a cone (4b, 5b), which is adapted to the walls (3a, 3b) of the bead (3), and the end face (4c, 5c) of said sleeve determining, at the cone end, the diameter of the collar- or flange-like reinforcement (7), and in that
c) the intermediate space between the end faces (4c, 5c) of the two clamping sleeves (4, 5) is filled with fibrous windings (6), whereupon
d) the clamping sleeves (4, 5) are released and removed.

2. Method according to claim 1, characterised in that, during the course of step a), at least one strip of fibrous material (3c) is wound therein.

3. Method according to claim 1, characterised in that the internal faces and end faces of the clamping sleeves (4, 5), which come into contact with composite material, are coated with a parting compound.

4. Method of producing fibrous composite pipes (2), which are wound onto a winding mandrel (1) and are to be provided with collar- or flange-like reinforcements (7), according to claim 1, characterised by the use of clamping sleeves (4, 5), which have the same coefficient of thermal expansion as the mandrel (1), and the internal diameter of the circular cylindrical portion of said clamping sleeves, in the clamped state, is adapted to the external diameter of the pipe (2), the clamping sleeves (4, 5) being maintained at the same temperature as the mandrel (1) during their use.

## Revendications

1. Procédé d'obtention de renforcements sous forme de collets ou de brides, sur des corps composites renforcés de fibres, notamment sur des tuyaux composites cylindriques renforcés de fibres enroulées, dans lequel le long des zones à renforcer du corps composite plusieurs couches d'enroulement de fibres imprégnées de résine, sont enroulées les unes au dessus des autres, et ensuite la résine est durcie, procédé caractérisé en ce que
a) le long de la zone à renforcer du corps composite renforcé de fibres (2) en premier lieu un renflement (3) avec des flancs (3a, 3b) qui montent d'une manière continue des deux flancs, est enroulé sur le corps composite (2) sur lequel
b) contre les deux flancs (3a, 3b) du renflement (3) une douille de serrage (4, 5) est pressée et mise en tension, dont la face interne se transforme sur le côté tourné vers le renflement, en un cône (4b, 5b)) adapté aux flancs (3a, 3b) du renflement (3) et dont la face frontale (4c, 5c) détermine sur l'extrémité du côté conique, le diamètre du renforcement (7) en forme de collet ou de bride
et en ce que
c) l'espace intermédiaire entre les surfaces frontales (4c, 5c) des deux douilles de serrage de tension (4, 5) est rempli d'enroulements de fibres (6) après quoi
d) les douilles de serrage (4, 5) sont désserrées et enlevées.

2. Procédé selon la revendication 1, caractérisé en ce que dans le cadre de l'étape a), au moins une bande de tissu de fibres (3c) est bobinée conjointement.

3. Procédé selon la revendication 1, caractérisé en ce que les surfaces internes qui viennent en contact avec le matériau composite et les surfaces frontales des douilles de serrage (4, 5) sont revêtues d'un agent de séparation.

4. Procédé d'obtention de tuyaux composites renforcés de fibres (2), enroulés sur une tige d'enroulement (1), qui doivent être pourvus de renforcements (7) en forme de collet ou de bride, selon la revendication 1, caractérisé par l'utilisation de douilles de serrage (4, 5), qui ont les mêmes coefficients de dilatation thermique que la tige (1) et dont le diamètre intérieur est adapté dans la partie cylindrique circulaire, à l'état de tension, au diamètre externe du tuyau (2), les douilles de serrage (4, 5) pendant leur utilisation, étant maintenues à la même température que la tige (1).
